**Europäisches Patentamt**

**European Patent Office**

**Office européen des brevets**

(19)

(11) **EP 1 076 465 A1**

(12) **EUROPEAN PATENT APPLICATION**

(43) Date of publication:
**14.02.2001 Bulletin 2001/07**

(51) Int Cl.[7]: **H04Q 7/22**

(21) Application number: **99306304.9**

(22) Date of filing: **10.08.1999**

(84) Designated Contracting States:
**AT BE CH CY DE DK ES FI FR GB GR IE IT LI LU MC NL PT SE**
Designated Extension States:
**AL LT LV MK RO SI**

(71) Applicant: **LUCENT TECHNOLOGIES INC.**
**Murray Hill, New Jersey 07974-0636 (US)**

(72) Inventors:
• **Foster, Gerard Terence**
  **Swindon, Wiltshire SN2 3GF (GB)**

• **Giuatina, Andrea**
  **Swindon, Wiltshire SN5 8JU (GB)**
• **Ramjee, Ramachandran**
  **Mataway, New Yersey 07747 (US)**
• **Wilson, Robert**
  **Andover, Hampshire SP10 2EE (GB)**

(74) Representative: **Williams, David John et al**
**Lucent Technologies UK Limited,**
**5 Mornington Road**
**Woodford Green, Essex IG8 0TU (GB)**

(54) **Handover technique for cellular network**

(57)     There is disclosed a method for achieving fast handover in a cellular communication network which is particularly advantageous in a packet switched wireless network. The method is particularly advantageous when applied in an environment in which a mobile has only one transceiver. A mobile system determines whether a neighbouring cell offers a stronger signal than the current cell, and sends a signal to the current cell indicating the identity of the cell to which it has determined a handover is desirable. The network is re-configured to establish a communication link with the mobile system via the new cell. Once the network is re-configured, the mobile station is notified via the current cell, and the mobile system starts communication via the new cell.

FIG. 2

## Description

## Field of the Invention

The present invention relates to an improved technique for the hand-over of a mobile between cells in a wireless cellular network, and particularly but not exclusively in a packet switched network. The invention is particularly related to a mobile which can camp-on only one cell at a time (i.e. has only one transceiver).

## Background to the Invention

In the last few years wireless networks for digital voice communications, such as GSM (Global System for Mobile Communications) have added packet data facilities to their service portfolio.

Packet voice service is a natural evolution of packet data services. At the present time, the packet systems specified do not allow a packet voice service with performance comparable to the performance of GSM voice service.

In GSM, handover is network controlled. The MS (Mobile System) periodically sends measurements of the signal strength in the cell in which the MS is currently connected (the so-called camped-on cell) and the camped-on cell's neighbouring cells to the network. The network uses the measurements to command, where appropriate, a handover of the MS to a better cell. The execution of the handover procedure is implementation dependent, but is quite fast on average: typical performances may vary from a hundred milliseconds to a few hundred milliseconds. Such fast handover is essential in GSM, for the transmission of voice in real-time.

GPRS (General Packet Radio Service) is a system specified by ETSI (European Telecommunication Standard Institute) for adding packet data services to a GSM network. In GPRS there is no handover procedure specified. The MS and the network perform a cell reselection procedure instead to establish a new connection in the new cell. The cell reselection procedure is normally MS controlled. The MS triggers a cell reselection based on the measurements of signals strengths in the camped-on cell and in neighboring cells. If it is determined appropriate to transfer to another cell, then the MS stops the connection in the current cell and signals its presence in the new cell. The network becomes aware of the cell reselection only when it receives MS signaling from the new cell. Only after that does the network update the internal connections and tables to redirect network data to the new cell.

In an alternative GPRS implementation, cell reselection can be network controlled. In this case the MS periodically sends measurements of the camped-on cell and neighbor cells to the network. The network uses the measurements to decide when to send an instruction to change the cell to a better cell. After this part of the procedure has occurred, the MS signals its presence in the new cell and the procedure continues as for the MS controlled cell reselection case.

Actual performance in both GPRS arrangements is implementation dependent, but the number of internal steps and messages involved in the procedure precludes the possibility for a handover procedure to be completed in less than a few seconds. For packet data service such an interruption is acceptable. However using these standardised GPRS procedures, the packet voice service, which is a real-time service, is interrupted for an unacceptably long time when compared to the voice service interruption in GSM handover.

Thus, in both GPRS implementations, the performance of the procedures is not fast enough to support a voice connection which requires performance of the order of one second or less to be comparable with GSM voice performance. Thus packet voice cannot be supported by GPRS as is currently standardised. It is therefore an object of the present invention to provide an improved handover technique suitable for packet voice transmission.

## Summary of the Invention

There is presented a fast packet voice handover procedure, which is suitable for a mobile user which is able to camp on only a single cell at a time (i.e. a mobile with only one transceiver) with performance comparable to the GSM handover procedure. The technique described herein allows a packet voice handover over a packet switched wireless network to be performed in a time scale acceptable for a voice connection, i.e. in the order of a second or less. The procedure for the handover is preferably driven by the MS, but the networking prepared before the MS leaves the current connection.

The technique presented herein is to have a MS controlled handover, but with the MS informing the network about the target cell of the handover and waiting for the network to establish internal connections before interrupting the voice service and connecting to the new cell. The aim is to reduce to a minimum the signalling a MS has to do when connecting to a new cell before it can start the packet voice transmission. The handover procedure described herein involves a packet voice service interruption comparable to the voice service interruption introduced by GSM handover. The MS has only one transceiver, and can thus camp-on only one cell at a time.

According to the present invention in a wireless cellular network there is provided a method of handover of a mobile user from a current cell to a new cell, comprising: determining a new cell for the mobile user; configuring the network to support the mobile user in the new cell; notifying configuration of the network to the mobile user: and connecting the mobile user in the new cell.

The step of determining a new cell for the mobile user may be performed by the mobile user. the method further comprising the step of signaling the identity of the new cell in the current cell.

The connection in the old cell may be terminated following connection in the new cell.

The method may further comprise the step of determining whether the current call is a packet voice call. wherein the method is only applied if it is.

The identity of the new cell may include any one of the cell colour, the radio access colour, or the BSID.

The step of configuring the network may comprise preparing the network to communicate with the mobile user via the new cell.

The step of configuring the network may comprise determining whether the new cell is associated with the same GII as the current cell.

If the new cell is associated with the same GII as the current cell the step of configuring the network may further comprise configuring a connection between the GII and the new cell.

If the new cell is not associated with the same GII as the current cell, the step of configuring the network may further comprise determining whether the new cell is associated with the same DR as the current cell.

If the new cell is associated with the same DR as the current cell, the step of configuring the network may further comprise configuring a connection between the DR and the new cell via the new GII.

If the new cell is not associated with the same DR as the current cell, the step of configuring the network may further comprise determining the new DR associated with the new cell; and configuring a connection between the new DR and the new cell via a new GII.

The mobile user may compare the carrier strength in the current cell to the carrier strength in neighbouring cells.

The wireless network may be connected to a further network, wherein the configuration of the network maintains the connection between the wireless network and the further network unchanged.

The invention will now be described by way of example with reference to particular embodiments and with reference tot he accompanying drawings, in which:

## Brief Description of the Drawings

Figure 1 illustrates a first example network scenario in which the invention may be implemented:
Figure 2 illustrates signaling between the network elements of Figure 1 in the first example implementation of the invention;
Figure 3 illustrates the steps performed in implementing the invention in all the scenarios describe herein:
Figure 4 illustrates a second example network scenario in which the invention may be implemented:
Figure 5 illustrates signaling between the network elements of Figure 4 in the second example implementation of the invention;
Figure 6 illustrates a third example network scenario in which the invention may be implemented; and
Figure 7 illustrates signaling between the network elements of Figure 6 in the third example implementation of the invention.

## Description of Preferred Embodiments

The technique according to the present invention is explained in the following as applied to the practical case of GPRS radio access. However, the invention has general applicability and it may be applied to any other system for cellular wireless radio access in order to obtain fast handover performance. The invention may be applied in any mobile environment, but it will be understood from the following description that it will have significant advantages when applied in a packet switched network.

The invention is herein described in relation to an embodiment of a mobile system which has only one transceiver, and is therefore capable of camping on to one cell at any given time. However, the invention is not limited to such an environment. It will be appreciated that the invention may also be applicable in mobile systems having more than one transceiver. In such systems, for example, one or more transceivers may handover between cells utilising the technique of the present invention.

This description discusses some signals and messages that are not specified in the GPRS standards. These messages have general validity and can be applied to any protocol that can support the described functionality.

The description of the invention assumes that each base transceiver station (BTS) has an integrated packet control unit (iPCU) as defined for GPRS, but the procedure can be applied to any possible location of the iPCU.

In the following description the invention is described by way of example with reference to several examples of a cellular network having an Internet based backbone network. However it will be apparent to the skilled reader that the invention may be more broadly applied to any other kind of packet based backbone network.

In the following examples, the packet voice functionality of the backbone is split between two network elements, a GII and a DR.

The GII is the the generic name for a GPRS to Internet Interworking network element. This network element performs the interworking between the GPRS BSS (Base Station Subsystem) part of a base transceiver station (BTS) and the Internet based backbone. The GII preferably maintains an internal table for the list of BTSs under its control.

The DR is a domain router, which is a standard Internet router with add-ons to support packet voice service. In particular, the DR in the following application has functionality for the conversion of packet voice frames in the wireless network to a format suitable for transmission between any other external network, both circuit switched and packet switched, and vice versa. It is out of the scope of this patent to explain the conversion procedure. The DR preferably has an internal table for the list of GIIs and routing areas (RAs) or base transceiver stations (BTSs) under its control.

A basic requirement for the handover procedure is that it should not change the connection procedure to the external network to which the voice user from the wireless network wishes to connect with.

The handover procedure of the present invention will now be described by way of reference to a first example. In the first example the MS is connected in, or camped-on, a current cell, and requests a handover to a different cell that is under the control of the same GII that controls the currently camped on cell. This can be formed inter-cell, intra-GII handover.

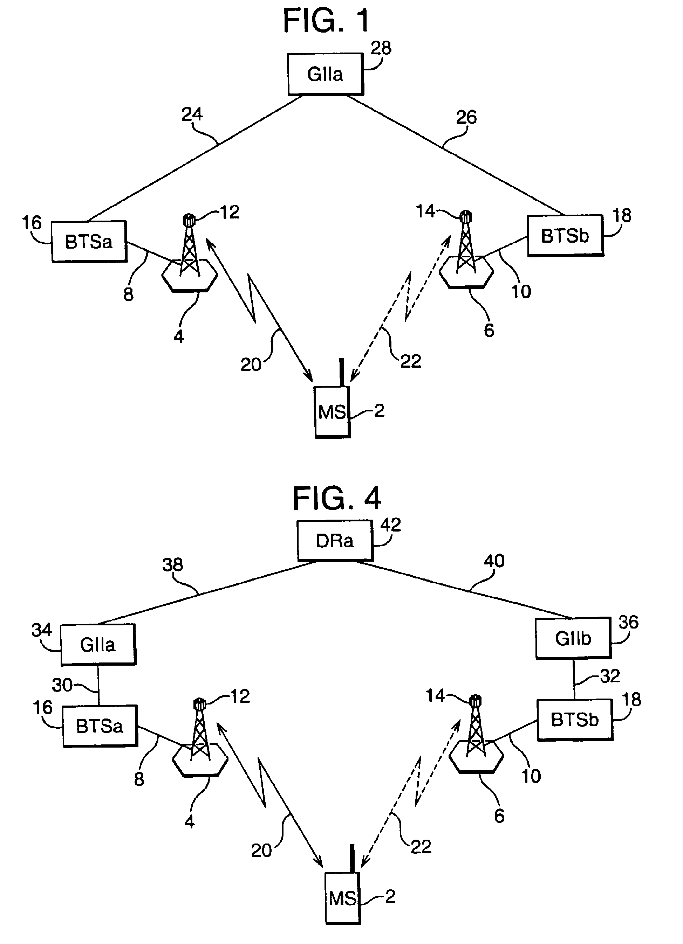

Figure 1 illustrates a network scenario for this first example. A GII network element 28 labelled GIIa is connected by a first interface link 24 to a first base transceiver station 16 labelled BTSa, and by a second interface link 26 to a second base transceiver station 18 labelled BTSb. The first base transceiver station BTSa is connected via a link 8 to an antenna 12 in a cell 4. The second base transceiver station BTSb 18 is connected via a link 10 to an antenna 14 in a cell 6. In the example of Figure 1 a mobile system MS 2, such as a mobile telephone, is connected in the cell 4 via the air interface 20. Thus the current cell of the mobile system 2 is the cell 4. In this example, the cell 6 offers a stronger signal to the mobile system 2, and thus a handover will be described such that the mobile system 2 connects to the cell 6 via the air interface 22.

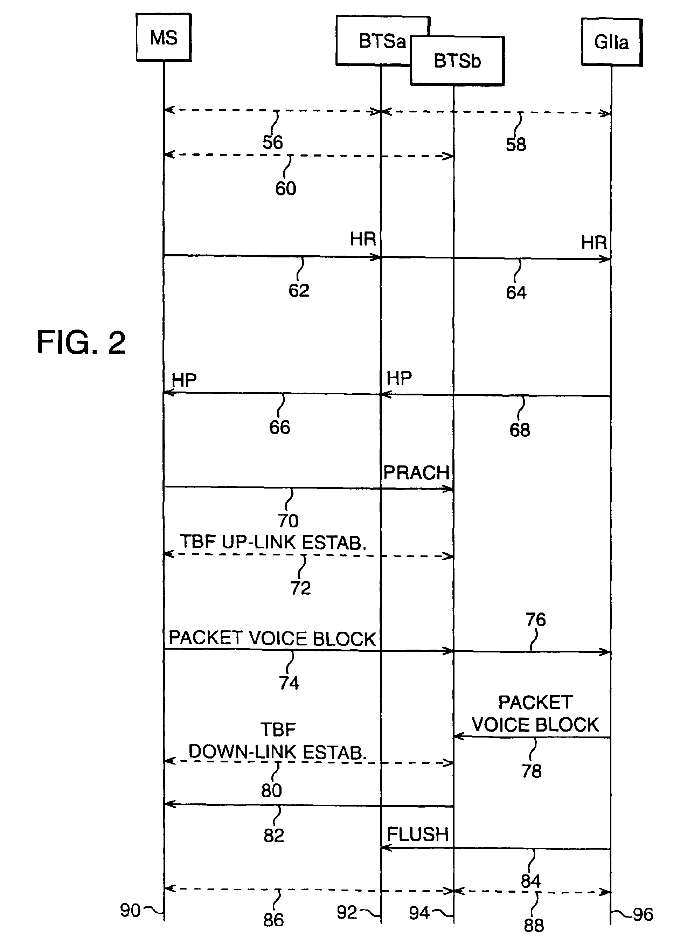

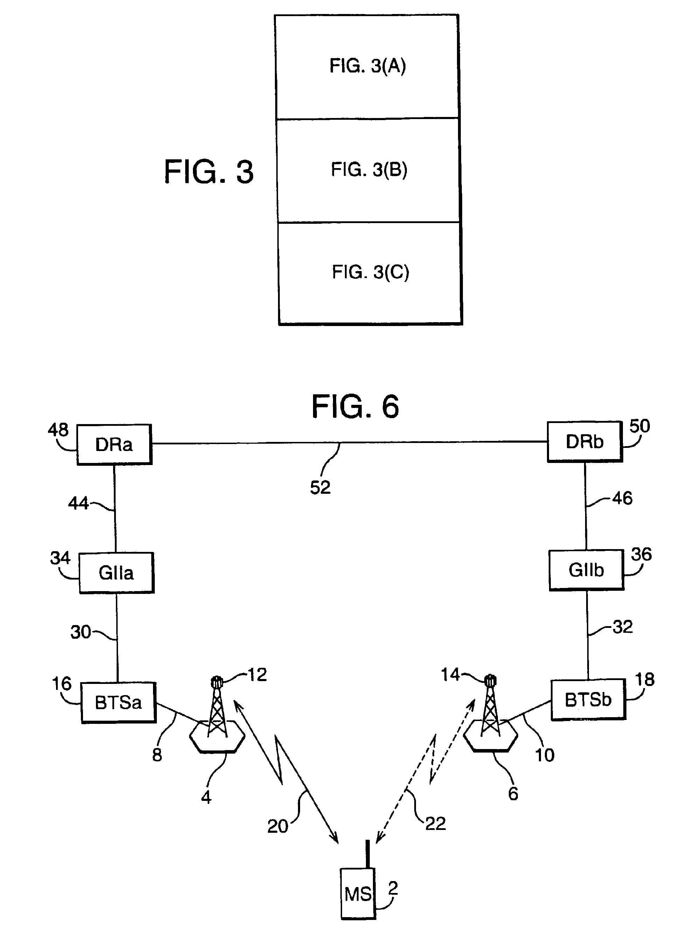

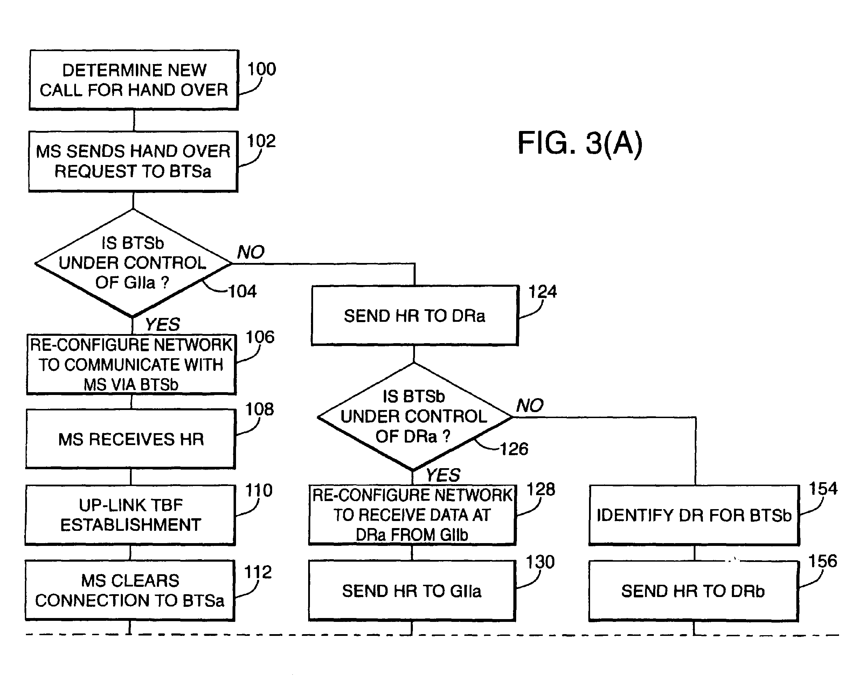

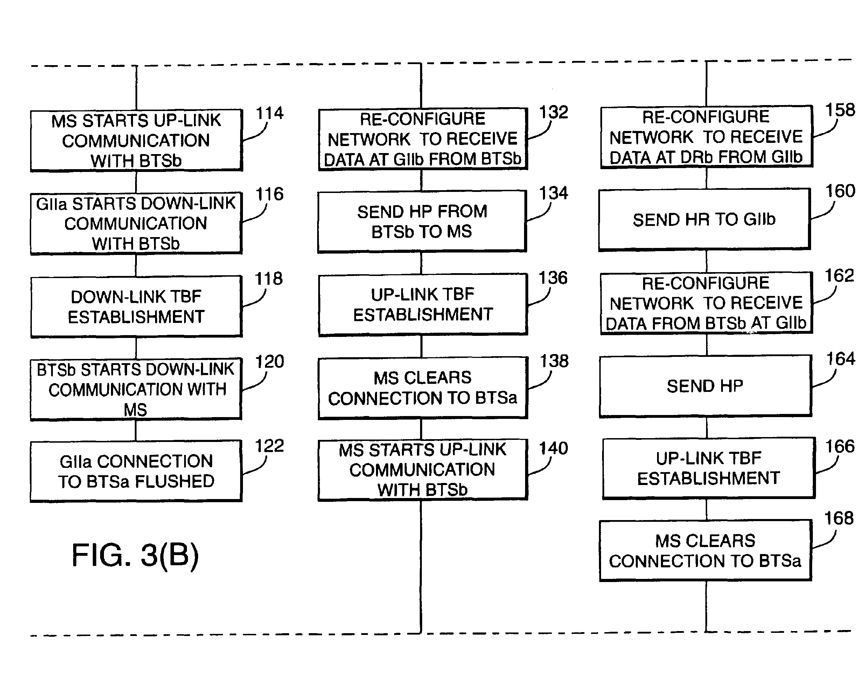

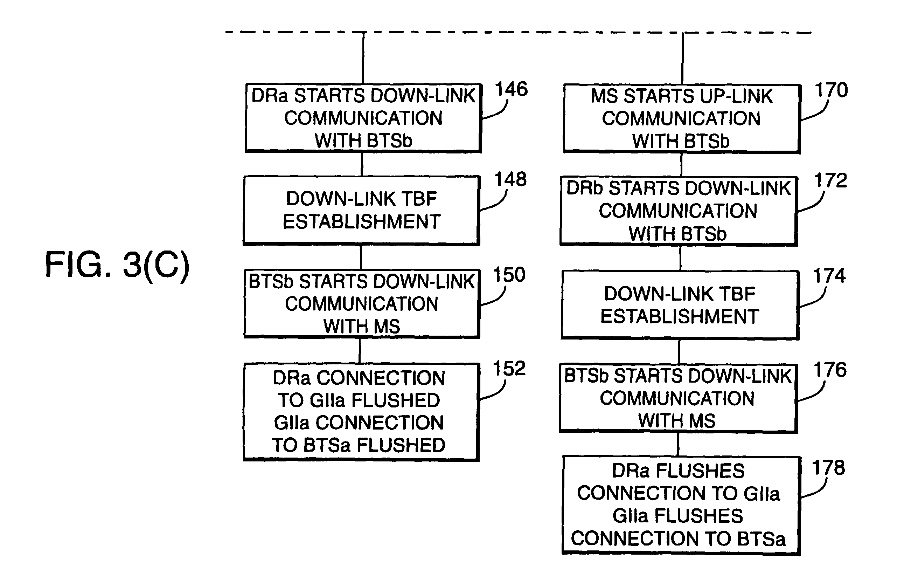

The handover operation according to the present invention for the network scenario of Figure 1 will be described with the aid of the flow chart of Figure 3, and the diagram of Figure 2 illustrating the signalling between the elements of the network of Figure 1 at various stages of the handover. In Figure 2, the network elements of Figure 1 are shown, the signals transmitted between those elements being illustrated. The vertical line 90 represents the interface to the mobile station, the vertical line 92 represents the interface to BTSa, the vertical line 94 represents the interface to BTSb, and the vertical line 96 represents the interface to GIIa.

In this example, the mobile system MS 2 is assumed to be initially camped-on the cell 4 with an active, on-going packet voice connection through the BTSa as represented by bi-directional signals 56 in Figure 2, to the GIIa 28, as represented by the bi-directional signals 58.

In a step 100, as represented by bi-directional signals 60 in Figure 2, the BTSa takes radio measurements of the carrier signal in the current cell and in neighbouring cells to determine if the carrier strength in another cell, relative to the carrier strength in the current cell, is such that it would be appropriate for the MS to connect with that cell.

In the step 100, the MS follows standard known techniques for GPRS, as in the GSM standard 03.60 (v. 6.3.0 paragraph 8.1). Consider the example where the MS, in a packet voice call on camped-on cell 4, is in range of cell 6. The MS looks at the signal strength of neighbouring cells when the signal strength in the current cell falls below a predetermined threshold level X. The MS determines that BTSb of cell 6 has a better signal as a result of simple signal level threshold tests. The MS tests to see whether the signal strength in the new cell is greater than a predetermined threshold level Y above the signal strength in the current cell. These tests preferably operated by the MS may be summarised as follows:

$$CNR \text{ of } BTSa < X \text{ dB} \qquad (1)$$

$$CNR \text{ of } BTSb > CNR \text{ of } BTSa + Y \text{dB} \qquad (2)$$

CNR is the carrier to noise ratio of the radio signal in the respective cell from the BTS in that cell. The parameters X and Y will be determined in dependence on the implementation.

If both tests (1) and (2) are valid, the MS starts the handover procedure from the current cell 4 to the new cell 6.

In a preferred implementation the MS only implements the handover technique of the present invention if the current call is a packet voice call. The MS knows from its internal state table whether it is in a packet voice call. Responsive to the internal table state indicating a packet voice call, instead of behaving like a standardised GPRS MS and switching cell immediately, the MS maintains the connection to BTSa in the current cell and, in a step 102, transmits a handover request signal HR to the base transceiver station BTSa of the currently camped-on cell as represented by signal 62 in Figure 2. The handover request signal HR is then forwarded to GIIa by BTSa as is illustrated by the signal 64 in Figure 2.

The handover request signal is preferably a message including details of the BTS associated with the prospective new cell, in this example BTSb. The details may include cell colour, radio access (RA) colour and the base station identifier (BSID). if known, as obtained from the Broadcast Control Channel (BCCH) or Packet Broadcast Channel (PBCCH) of BTSb.

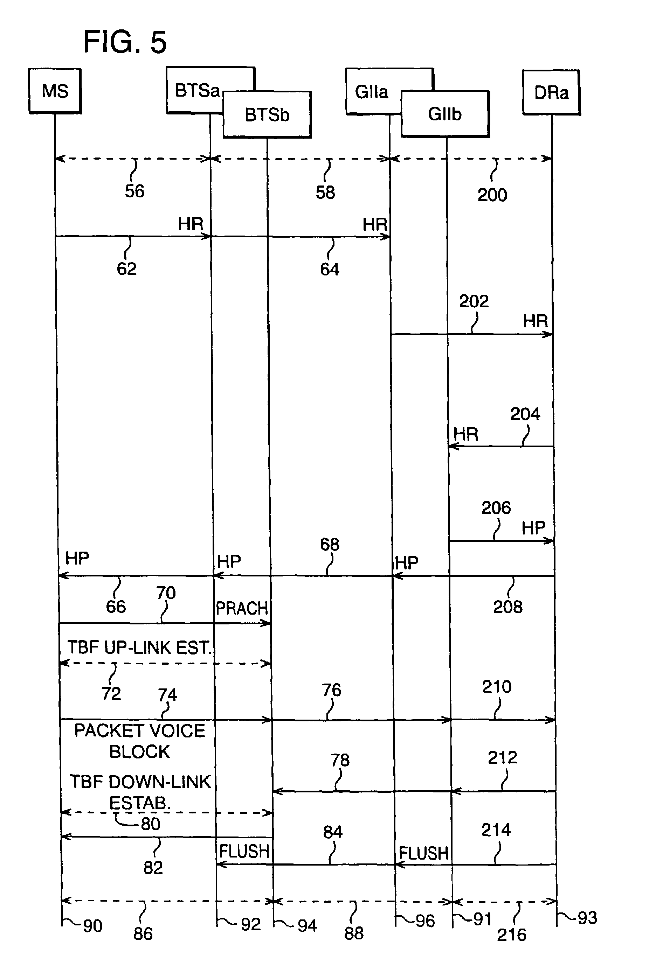

In a step 104 GIIa, responsive to the handover request signal HR, checks if BTSb is under its control. The GII preferably has a table with all the cell identifiers under its control. If BTSb is not under the control of the GII 28, the GII 28 will follow the procedure explained further hereinbelow with respect to Figures 4 and 5.

If BTSb is under the control of the GIIa 28, then the the network is re-configured in a step 106 such that the network can communicate with the MS via BTSb. BTSb is prepared to receive data from the new cell 6 without releasing the connection to the current cell 4. This means that the GII adds to the local table entry that it can receive data for the Temporary Logic Link Identity (TLLI) associated with the MS from a different BSS Virtual Control Identifier (BVCI). In other words, the GIIa can receive data from the MS via BTSb as well as BTSa.

Following this re-configuration of the network, in a step 108 the GIIa 28 sends to the MS a handover proceeding signal HP to specify that the GIIa 28 is ready for the handover. The handover proceeding signal HP is sent to the MS via BTSa as is illustrated by the signals 68 and 66 in Figure 2.

Responsive to the handover proceeding signal HP, the MS does not release the active connection with BTSa in the current cell 4. The MS switches to BTSb in the new cell 6 and sends a Packet Random Access Channel (PRACH) to start an up-link Temporary Block Flow (TBF) establishment, as indicated by signal 70 in Figure 2. Thus as indicated by step 110 in Figure 3, the MS initiates communication with BTSb in the new cell 6. The up-link TBF establishment is between the mobile station and the base transceiver station only, and is represented by the bi-directional signals 72 in Figure 2. The MS waits for a confirmation from the BTSb in the new cell. The confirmation comprises a packet up-link assignment in BTSb for a two-phase access, which completes the up-link TBF establishment.

It is not currently possible to support the up-link TBF establishment in a fast enough way on the Common Control Channel (CCCH) and so it is proposed to preferably use the Packet Common Control Channel (PCCCH) to ensure fast packet voice handover.

If errors occur or the procedure is not completed within z milliseconds, the MS switches back to BTSa and tries another handover. The parameter z will be implementation dependent, but typically will fall in the range: 200ms<z< 500ms.

Once the TBF up-link establishment commences, the voice buffers in the MS may discard some voice blocks if the queue begins to grow too much.

If the MS is successfully allocated an up-link TBF in the new cell 6 from BTSb, in a step 112 it internally clears the connection to BTSa.

The MS initiates up-link communication with BTSb by sending a first up-link packet voice block, either containing voice or silence coding, to BTSb as represented by signal 74 in Figure 2. The BTSb in turn forwards the voice block on to the GIIa 28 as represented by arrow 76. This operation is represented by step 114 in Figure 3.

When the GIIa 28 receives the first packet voice block from the MS via BTSb, it forwards down-link voice blocks to the BVCI for BTS as represented by signal 78 in Figure 2, thereby starting down-link communication with the mobile station MS as represented by step 116.

Responsive to receipt of the first down-link voice block from GIIa, in the step 118, the base transceiver station BTSb initiates a down-link temporary block flow TBF with the mobile station MS. The down-link TBF establishment follows the GSM standard 04.60 (v.6.3.0 paragraph 7.2) to establish the down-link TBF.

The down-link TBF establishment is between the base transceiver station and the mobile station, and is represented by the bi-directional signals 80 in Figure 2. The BTSb starts the down-link Temporary Block Flow (TBF) establishment procedure by sending a packet down-link assignment PDLA on the up-link TBF Packet Associated Control Channel (PACCH) to the MS.

In step 120. following the establishment of the down-link TBF, the MS receives a first speech or silence packet from the BTSb, as represented by signal 82 in Figure 2. and down-link communication with the BTSb is started.

As represented by signal 84 in Figure 2, in step 122 following the establishment of the down-link TBF indicated by receipt of the first voice or silence block at the MS, the GIIa flushes the connection with BTSa as specified in the GSM standard 08.18 (v.6.3.0 paragraph 8.1). The BTSa internally deletes the former connection to the MS.

After having performed the handover procedure, the MS has an ongoing packet voice connection through BTSb and the GII, as represented by bi-directional signals 86 and 88.

The above steps connect the lower layer for the packet voice service for the MS, but it is still necessary to perform the routing area update (as in GSM 03.60 v.6.3.0 paragraph 6.9), or any equivalent procedure, to signal the cell change to upper layers. This routing area update is well known to one skilled in the art, and is outside the scope of the present invention.

The handover procedure of the present invention will now be described with reference to a second example in which the mobile system requests handover to a different cell that is under the control of a different GII, but the target cell is under the control of the same DR that controls the currently camped on cell. This can be termed inter-GII, intra-DR handover.

Figure 1 illustrates the network scenario of Figure 1 adapted to illustrate this second example. The network elements of Figure 1 appearing in Figure 4 are referred to in Figure 4 by the same reference numerals. In the example of Figure 4 the BTSa 16 and the BTSb 18 are connected to different GIIs. The BTSa 16 is connected via an interface link 30 to the GIIa 34. The BTSb 18 is connected via an interface link 32 to a second GII 36 labelled GIIb. GIIa and GII are each connected to a DR 42 labelled DRa via respective internet based network interfaces 38 and 40.

As in the previous example, the current cell of the mobile system 2 is the cell 4. The cell 6 offers a stronger signal to the mobile system 2, and thus a handover will be described such that the mobile system 2 connects to the cell 6 via the air interface 22.

The handover operation according to the present invention for the network scenario of Figure 4 will be described with the aid of the flow chart of Figure 3, and the diagram of Figure 5 illustrating the communication between the elements of the network of Figure 1 at various stages of the handover. In Figure 5, the network elements of Figure 4 are shown, and like reference numerals are used to refer to elements or features corresponding to those shown in Figure 2. In addition to those interfaces shown in Figure 2, the vertical line 91 represents the interface of GIIb and the vertical line 93 represents the interface of DRa.

The MS is currently camped on BTSa, which is under the control of GIIa, with an active packet voice connection and starts a handover procedure to BTSb, which is under the control of GIIb. Both GIIa and GIIb are under control of the same DR, DRa. The MS has an active, ongoing packet voice connection to the DRa via the BTSa and the GIIa as represented by bi-directional signals 56, 58 and 200 in Figure 5. Like reference numerals are used in Figure 5 to designate signals corresponding to the signals in Figure 2.

In the step 100, the BTSa again takes radio measurements, as represented by bi-directional signals 60, of the carrier signal in the current cell and in neighbouring cells to determine if a handover is appropriate. As before, it is determined that a handover to a new cell 6 is appropriate.

As described hereinabove, the MS maintains the connection to BTSa in the current cell and, in the step 102, transmits the handover request signal HR to the base transceiver station BTSa of the currently camped-on cell as represented by signal 62. The handover request signal HR is then forwarded to GIIa by BTSa as is illustrated by the signal 64 in Figure 5.

In the present example, it is determined in step 104 that the base transceiver station of the new cell. BTSb, is not under the control of the GII, GIIa, of the current cell. The handover request signal is then forwarded, in a step 124, to the DRa, as represented by the signal 202 in Figure 5. In a step 126, in the DRa it is determined whether the BTSb is associated with the same DR, DRa, as BTSa. In the present example, the BTSb is associated with DRa.

As an alternative, GIIa could have a map of neighbouring GIIs associated with DRa, and could select GIIb and send the GIIb address to the DRa.

If BTSb is under the control of the DRa 42, then the network is re-configured in a step 128. In this re-configuration DRa prepares to receive data from GIIb without releasing the connection via GIIa to the current cell 4. This means that the DRa adds to the local table entry that it can receive data for the MS from a different GII, namely GIIb.

The DRa then forwards, in step 130, the handover request signal to the GIIb. as represented by signal 204 in Figure 5. To complete the network re-configuration. in step 132. the GIIb then prepares to receive data for the MS from the BVCI of BTSb. and opens the real-time connection to the DRa. After that the GIIb. in step 134, sends back to the DRa a handover proceeding signal HP as indicated by signal 206 in Figure 5. to specify that GIIb is ready for the handover.

The currently camped on DRa then sends back to the MS the handover proceeding signal HP via GIIa, and BTSa, as indicated by the signals 208. 68 and 66, to indicate that the internet backbone is ready for the handover.

Responsive to the handover proceeding signal HP, as before the MS does not release the active connection with BTSa in the current cell 4. The MS switches to BTSb in the new cell 6 and sends a Packet Random Access Channel (PRACH) to start an up-link Temporary Block Flow (TBF) establishment in step 136, as indicated by signal 70 in Figure 5. Thus, the MS initiates communication with BTSb in the new cell 6. The up-link TBF establishment is represented by the bi-directional signals 72 in Figure 5. The MS waits for a confirmation from the BTSb in the new cell. The confirmation comprises a packet up-link assignment in BTSb for a two-phase access, which completes the up-link TBF establishment.

As described hereinabove with reference to the first example, if anything is wrong or the procedure is not completed within z milliseconds, the MS switches back to BTSa and tries another handover.

If the MS is successfully allocated an up-link TBF in the new cell 6 from BTSb, in a step 138 it internally clears the connection to BTSa. The MS then sends a first up-link packet voice block, either containing voice or silence coding, to BTSb as represented by signal 74 in Figure 5, which in turn forwards the voice block onto the GIIa 28 as represented by signal 76. The voice block is then forwarded to the DRa, as represented by the signal 210. This operation is represented by step 140 in Figure 3.

When the DRa receives the first packet voice block from the MS via BTSb, it forwards down-link voice blocks to the BVCI for BTSb via GIIb as represented by signals 212 and 78 in Figure 5. As an alternative, the GIIb could have a trigger on the first packet voice block received to send a message to the DR to switch connection from GIIa to GIIb. The DRa thus starts a down-link communication with the BTSb. as represented by step 146.

As represented by bi-directional signals 80, in step 148 the MS then follows the GSM standard 04.60 (v.G.3.0 paragraph 7.2) to establish the down-link TBF. Following the reception of the first down-link packet voice block from the GIIa 28, the BTSb sends a packet down-link assignment PDLA on the up-link TBF Packet Associated Control Channel (PACCH) to the MS to start the down-link Temporary Block Flow (TBF) establishment procedure.

Following the establishment of the down-link TBF, the BTSb starts down-link communication with the MS, and the MS receives a first speech or silence packet from the BTSb, as represented by signal 82 in Figure 5. This is shown in Figure 3 as step 150.

As represented by signals 214 and 84 in Figure 5, in step 152 following the establishment of the down-link TBF indicated by receipt of the first voice or silence block at the MS, the DRa flushes the connection with GIIa, and the GIIa flushes the connection with BTSa, all as specified in the GSM standard 08.18 (v.6.3.0 paragraph 8.1).

After having performed the handover procedure, the MS has an ongoing packet voice connection through BTSb and the GIIb to the DRa, as represented by bi-directional signals 216, 86 and 88.

The handover procedure of the present invention will now be described with reference to a third example in which the mobile system requests handover to a cell that is antler the control of a different DR.

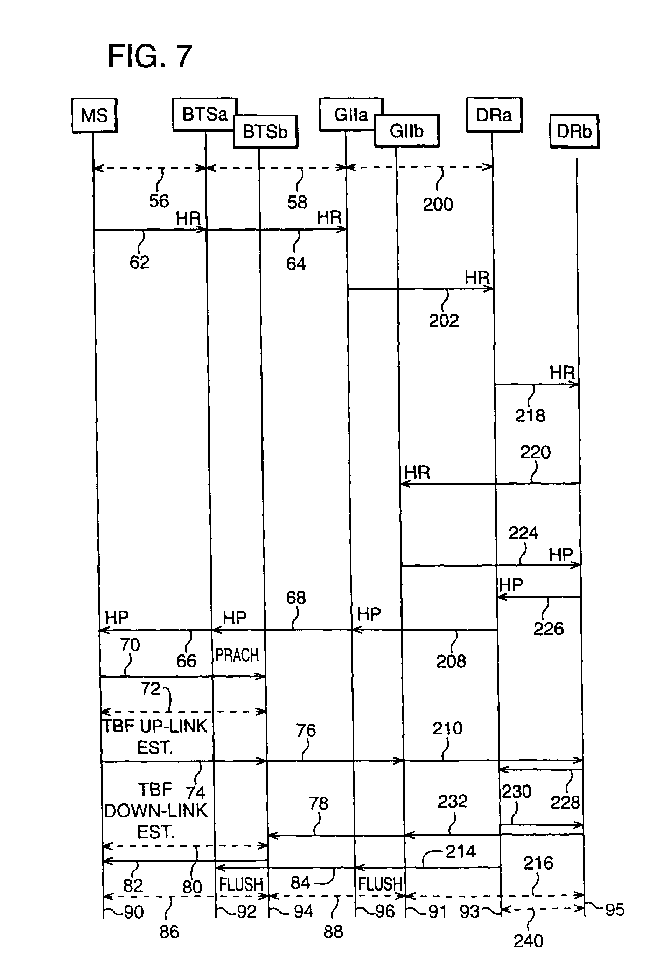

Figure 6 illustrates the network scenario of Figure 4 further adapted to illustrate this third example. The network elements of Figure 4 appearing in Figure 6 are referred to in Figure 6 by the same reference numerals. In the example of Figure 6. GIIs 34 and 36 are connected to different DRs. The GIIa 34 is connected via an internet based network interface 44 to the DRa 48. The GIIb 36 is connected via an internet based network interface 46 to a DR 50, labelled as DRb. The DRs, DRa and DRb, are interconnected by a further internet based network interface 52.

The handover operation according to the present invention for the network scenario of Figure 1 will be described with the aid of the flow chart of Figure 3. and the diagram of Figure 7 illustrating the signaling communication between elements of the network of Figure 6 at various stages. In Figure 7, the network elements of Figure 6 are shown, and like reference numerals are used to refer to elements or features corresponding to those shown in Figure 5. In addition, the vertical line 95 represents the interface of DRb.

As in the example scenario of Figure 4, the mobile system MS 2 camped-on cell 4 has an active, ongoing packet voice connection through the BTSa (as represented by bi-directional signal 56) to GIIa (as represented by bi-directional signal 58), and DRa (as represented by bi-directional signal 200).

Once again, in the step 100 the BTSa takes radio measurements of the carrier signals in the current and neighbouring cells, and an appropriate handover to the new cell 6 is determined. The MS maintains the connection to BTSa, and in step 102, transmits the handover request signal HR to the base transceiver station BTSa of the currently camped on cell. The handover request signal is forwarded to the GIIa as described before. In step 104 it is determined that BTSb is not under the control of DRa. The handover request signal HR is forwarded to DRa in step 124 and in step 126 it is determined that the BTSb is not under control of DRa.

When DRa finds that BTSb is not under its control, then in a step 154 DRa checks its table of adjacent RA's if it has one, to find the DR which does control radio access for BTSb. Alternatively, DRa may signal to adjacent DR's for their routing tables of controlled RA's if it has not already done since it was last configured.

Once DRa has identified the destination DR to route the handover to, DRb, DRa prepares the path to DRb. And in step 156 forwards the handover request to DRb, as represented by signal 218 in Figure 7.

In a step 158, DRb prepares a connection back to DRa and begins the network re-configuration by making the connection to the new GII, GIIb. In a step 160, as represented by signal 220, DRb then forwards the handover request to GIIb.

In step 162. GIIb continues the re-configuration of the network by preparing to receive data for the MS TLLI, and GIIb opens the real-time connection back to DRb. GIIb then sends, in a step 164, a handover proceeding signal back to DRb, as represented by signal 224. DRb forwards the handover proceeding signal to DRa, as represented by signal 226.

The currently camped on DR, DRa, then sends back to the MS the handover proceeding signal HP via GIIa and BTSa, as indicated by signals 208, 68 and 66, to specify that the internet backbone is ready for the handover, i.e. the network has been re-configured.

Responsive to the handover proceeding signal HP, as before the MS does not release the active connection with BTSa in the current cell 4. The MS switches to BTSI) in the new cell 6 and sends a Packet Random Access Channel (PRACH) to start an up-link Temporary Block Flow (TBF) establishment in step 166, as indicated by signal 70 in Figure 7. Thus, the MS initiates communication with BTSb in the new cell 6. The up-link TBF establishment is represented by the bi-directional signals 72 in Figure 7. The MS waits for a confirmation from the BTSb in the new cell. The confirmation again comprises a packet up-link assignment in BTSb for a two-phase access, which completes the up-link TBF establishment.

As described hereinabove with reference to the first and second examples, if anything is wrong or the procedure is not completed within z milliseconds, the MS switches back to BTSa and tries another handover.

If the MS is successfully allocated an up-link TBF in the new cell 6 from BTSb, in a step 168 it internally clears the connection to BTSa. The MS then sends a first up-link packet voice block, either containing voice or silence coding, to BTSb as represented by signal 74 in Figure 7, which in turn forwards the voice block onto the GIIb 28 as represented by signal 76. The voice block is then forwarded to DRb, as represented by the signal 210.

As indicated by signal 228, the packet voice block is then forwarded by DRb to DRa. When DRa receives this voice block, it forwards any subsequent voice blocks in the down-link direction to DRb. As an alternative, DRb could have a trigger on the first packet voice block received to send a message to DRa to switch connection from DRa to DRb and onto GIIb.

The DRa then sends the next down-link voice or silence block to DRb, as represented by signal 230. DRb then starts down-link communication with BTSb, as represented by step 172, by forwarding this signal on to GIIb as represented by signal 232, which in turn forwards the signal onto BTSb, as represented by signal 78.

Receipt of the signal 78 at BTSb initiates the down-link TBF establishment of BTSb with the MS. The TBF down-link establishment takes place in step 174 in the manner exactly as described hereinabove for the other examples, and is again represented in Figure 7 by bi-directional signals 80. Following the down-link establishment, in step 176 BTSb starts down-link communication with the MS by forwarding the voice packet block to the MS as before as represented by signal 82 in Figure 7.

In a step 178, the DRA then flushes its connection with GIIa as represented by signal 214 in Figure 7, which in turn flushes its connection with BTSa as represented by signal 84 in Figure 7.

After having performed the handover procedure, the MS has an ongoing packet voice connection through BTS(b) and GII(b) to the new DR, DR(b), as represented by bi-directional signals 86, 88 and 216. As represented by signal 240, connection to the network from DRb is still provided through DRa.

In all the above examples, the main part of the delay introduced in the handover derives from the up-link TBF establishment and down-link TBF establishment. The backbone network introduces minor delays as compared to these. The result of the first evaluation of delay is that the up-link has a hole in transmission of about 200ms and the down-link of about 350ms.

## Claims

1. In a wireless cellular network, a method of handover of a mobile from a current cell to a new cell, comprising: determining a new cell for the mobile; configuring the network to support the mobile in the new cell; notifying configuration of the network to the mobile; and connecting the mobile in the new cell.

2. The method of claim 1, wherein the step of determining a new cell for the mobile is performed by the mobile user, the method further comprising the step of signaling the identity of the new cell in the current cell.

3. The method of claim 1 or claim 2, wherein the connection in the old cell is terminated following connection in the new cell.

4. The method of any one of claims 1 to 3 further comprising the step of determining whether the current call is a packet voice call, wherein the method is only applied if it is.

5. The method of any one of claims 2 to 4 wherein the identity of the new cell may include any one of the cell colour, the radio access colour, or the BSID.

6. The method of any one of claims 1 to 5 wherein the step of configuring the network comprises preparing the network to communicate with the mobile via the new cell.

7. The method of any one of claims 1 to 6 wherein the step of configuring the network comprises determining whether the new cell is associated with the same GII as the current cell.

8. The method of claim 7 wherein if the new cell is associated with the same GII as the current cell the step of configuring the network further comprises configuring a connection between the GII and the new cell.

9. The method of claim 7 wherein if the new cell is not associated with the same GII as the current cell, the step of configuring the network further comprises determining whether the new cell is associated with the same DR as the current cell.

10. The method of claim 9 wherein if the new cell is associated with the same DR as the current cell, the step of configuring the network further comprises configuring a connection between the DR and the new cell via the new GII.

11. The method of claim 9 wherein if the new cell is not associated with the same DR as the current cell, the step of configuring the network further comprises determining the new DR associated with the new cell; and configuring a connection between the new DR and the new cell via a new GII.

12. The method of any one of claims 2 to 11 in which the mobile user compares the carrier strength in the current cell to the carrier strength in neighbouring cells.

13. The method of any preceding claim in which the wireless network is connected to a further network, wherein the configuration of the network maintains the connection between the wireless network and the further network unchanged.

**14.** The method of any preceding claim in which the mobile has only one transceiver.

**15.** The method of any preceding claim in which the mobile has more than one transceiver.

**16.** In packet switched cellular network, the method of any preceding claim.

**17.** In a GPRS mobile communications system, the method of any preceding claim.

**FIG. 1**

**FIG. 4**

FIG. 2

| MS | BTSa | BTSb | GIIa |

56

58

60

HR ——→ 62        HR 64 ——→

HP | 66        HP        68

PRACH ——→
70

TBF UP-LINK ESTAB.
72

76

PACKET VOICE BLOCK ——————————→
74

PACKET
VOICE BLOCK
78

TBF
DOWN-LINK ESTAB.
80

←——
82

FLUSH ←——
84

90        92        94        96
86                88

## FIG. 3

| |
|---|
| FIG. 3(A) |
| FIG. 3(B) |
| FIG. 3(C) |

## FIG. 6

## FIG. 3(A)

- 100 DETERMINE NEW CALL FOR HAND OVER
- 102 MS SENDS HAND OVER REQUEST TO BTSa
- 104 IS BTSb UNDER CONTROL OF GIIa ?
  - YES → 106 RE-CONFIGURE NETWORK TO COMMUNICATE WITH MS VIA BTSb
    - 108 MS RECEIVES HR
    - 110 UP-LINK TBF ESTABLISHMENT
    - 112 MS CLEARS CONNECTION TO BTSa
  - NO → 124 SEND HR TO DRa
    - 126 IS BTSb UNDER CONTROL OF DRa ?
      - YES → 128 RE-CONFIGURE NETWORK TO RECEIVE DATA AT DRa FROM GIIb
        - 130 SEND HR TO GIIa
      - NO → 154 IDENTIFY DR FOR BTSb
        - 156 SEND HR TO DRb

FIG. 3(B)

EP 1 076 465 A1

FIG. 3(C)

DRa STARTS DOWN-LINK COMMUNICATION WITH BTSb — 146

DOWN-LINK TBF ESTABLISHMENT — 148

BTSb STARTS DOWN-LINK COMMUNICATION WITH MS — 150

DRa CONNECTION TO GIIa FLUSHED GIIa CONNECTION TO BTSa FLUSHED — 152

MS STARTS UP-LINK COMMUNICATION WITH BTSb — 170

DRb STARTS DOWN-LINK COMMUNICATION WITH BTSb — 172

DOWN-LINK TBF ESTABLISHMENT — 174

BTSb STARTS DOWN-LINK COMMUNICATION WITH MS — 176

DRa FLUSHES CONNECTION TO GIIa GIIa FLUSHES CONNECTION TO BTSa — 178

EP 1 076 465 A1

## FIG. 5

# FIG. 7

| | **European Patent Office** | **EUROPEAN SEARCH REPORT** | **Application Number** EP 99 30 6304 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 98 32303 A (NOKIA TELECOMMUNICATIONS OY ;KANGAS ISMO (FI); MUSTAJAERVI JARI (F) 23 July 1998 (1998-07-23) * page 11, line 21 - page 12, line 2 * * page 12, line 25 - page 14, line 35 * --- | 1-3,5-8, 13 | H04Q7/22 |
| X | EP 0 898 438 A (NOKIA MOBILE PHONES LTD) 24 February 1999 (1999-02-24) * column 9, line 41 - column 10, line 40 * --- | 1,3,6, 12-14 | |
| A | "Handover Procedures (3G TS 23.009 version 3.0.0)" 3RD GENERATION PARTNERSHIP PROJECT; TECHNICAL SPECIFICATIONS GROUP CORE NETWORK,1 May 1999 (1999-05-01), page 14-19 XP002088537 Sophia Antipolis, France ----- | | |
| | | | TECHNICAL FIELDS SEARCHED (Int.Cl.7) H04Q |

The present search report has been drawn up for all claims

| Place of search BERLIN | Date of completion of the search 14 January 2000 | Examiner Rothlübbers, C |
|---|---|---|

EPO FORM 1503 03.82 (P04C01)

**ANNEX TO THE EUROPEAN SEARCH REPORT
ON EUROPEAN PATENT APPLICATION NO.**

EP 99 30 6304

This annex lists the patent family members relating to the patent documents cited in the above-mentioned European search report.
The members are as contained in the European Patent Office EDP file on
The European Patent Office is in no way liable for these particulars which are merely given for the purpose of information.

14-01-2000

| Patent document cited in search report | Publication date | Patent family member(s) | | Publication date |
|---|---|---|---|---|
| WO 9832303 A | 23-07-1998 | FI | 970239 A | 21-07-1998 |
| | | AU | 5665898 A | 07-08-1998 |
| | | EP | 0953269 A | 03-11-1999 |
| | | ZA | 9800435 A | 29-07-1998 |
| EP 0898438 A | 24-02-1999 | FI | 973425 A | 21-02-1999 |
| | | AU | 7045198 A | 08-03-1999 |
| | | WO | 9909774 A | 25-02-1999 |
| | | JP | 11113071 A | 23-04-1999 |

EPO FORM P0459

For more details about this annex : see Official Journal of the European Patent Office, No. 12/82